# FASCICULE DE BREVET EUROPEEN

(11) **EP 0 812 375 B1**
(45) Date de publication et mention de la délivrance du brevet: **04.11.1998**
(21) Numéro de dépôt: 96902397.7
(22) Date de dépôt: 29.02.1996
(51) Int. Cl.: E04C 3/08, E04G 3/00

(54) **POUTRE-TREILLIS, NOTAMMENT POUR FORMER UN GARDE-CORPS PORTEUR DE PASSERELLE SUSPENDUE**
GITTERTRÄGER FÜR TRAGENDE GELÄNDER VON HÄNGEBÜHNE
LATTICE GIRDER, IN PARTICULAR FOR FORMING A LOAD-BEARING GUARDRAIL ON A SUSPENDED WALKWAY

(30) Priorité: 02.03.1995 FR 9502406
(43) Date de publication de la demande: 17.12.1997
(73) Titulaire: Société d'Etude et de Construction d'Appareils de Levage et de Traction (SECALT S.A.), 1011 Luxembourg-Pulvermuhl (LU)
(72) Inventeur: GORTAN, Guido, L-3335 Hellange (LU)
(74) Mandataire: Hud, Robert
(86) Numéro de dépôt international: IB9600152
(87) Numéro de publication internationale: WO9627060

(56) Documents cités:
- EP-A- 0 577 096
- BE-A- 884 366
- DE-U- 9 305 732
- FR-A- 2 040 197
- FR-A- 2 624 173
- GB-A- 1 185 883

## Description

L'invention concerne des poutres-treillis qui sont constituées par des éléments reliés entre eux de façon rigide afin de réaliser des structures susceptibles de porter des charges.

On connait de telles poutres-treillis dont les éléments constitutifs sont disposés en fonction de l'orientation des charges à supporter et de leur répartition. Ces éléments sont généralement reliés entre eux par soudure.

L'une des applications de ces structures est de former des garde-corps porteurs de passerelle et notamment de passerelle suspendue afin de relier la charge d'un plancher à des étriers de liaison ou de suspension.

La présente invention a pour objet de réaliser de telles structures de poutre-treillis, notamment pour former des garde-corps de passerelle, dans lesquelles l'assemblage des deux types de profilés est constitué par un encastrement rigide réalisé uniquement au moyen de découpes pratiquées dans ces profilés, à l'exclusion de tout autre moyen de liaison quel qu'il soit, et en particulier à l'exclusion de tout clipsage ou soudure.

Une telle solution comporte notamment pour avantages de réduire les coûts de fabrication et de supprimer les contraintes qui sont inhérentes à la technique de la soudure. En effet, les structures concernées sont avantageusement réalisées en aluminium, étant donné le gain de poids obtenu par l'emploi de ce matériau.

Or, spécialement pour l'aluminium, la technique de la soudure a des conséquences gênantes et coûteuses. L'opération de soudure entraîne sur la zone concernée un effet de recuit neutralisant partiellement mais notablement l'amélioration de limite élastique obtenue par traitement thermique de la qualité d'aluminium utilisée à cette fin.

L'abaissement de la limite élastique qui en résulte nécessite de dimensionner plus largement les composants utilisés, d'où une augmentation de coût.

Par ailleurs toute soudure entraîne une aggravation des risques de corrosion et nécessite, pour limiter ces risques, une procédure de contrôle qualité stricte et coûteuse, à quoi s'ajoute le coût d'un personnel qualifié.

Par le document EP-A- 0 577 096 on connaît une poutre-treillis faite de longerons creux assemblés à des traverses pleines présentant un profil en forme de I. Chaque longeron comporte une fente longitudinale d'une largeur correspondant à l'âme centrale de la traverse et dans laquelle la traverse oblique peut coulisser sans être verrouillée en un point particulier du longeron. La réalisation d'une poutre-treillis selon ce document présente l'inconvénient de nécessiter alors que le nombre de traverses, leur inclinaison et la longueur des longerons soient tels que chaque traverse venant en butée contre les traverses adjacentes, les extrémités des traverses terminales viennent se positionner aux extrémités des longerons. Il est en outre nécessaire qu'à ces extrémités un dispositif, non décrit d'ailleurs dans ce document, vienne verrouiller l'ensemble.

Le document GB-A-1 185 883 décrit un noeud d'encastrement entre un longeron et une traverse, pour la réalisation d'un garde-corps. A cet effet, l'extrémité de la traverse est engagée dans une ouverture formée au niveau de la liaison longitudinale de deux demi-élements constituant le longeron, et elle y est retenue par clipsage, des lèvres élastiques solidaires des demi-éléments s'engageant dans des rainures pratiquées dans la traverse.

La structure de poutre-treillis selon l'invention, qui est constituée par un assemblage d'éléments reliés entre eux par l'encastrement de parties saillantes des uns dans des parties formant logements récepteurs des autres, se caractérise en ce que ses éléments de structure sont constitués uniquement de profilés creux homogènes présentant des découpes destinées à réaliser par encastrement des liaisons par lesquelles les parties encastrées s'autoverrouillent latéralement avec les parties qui les reçoivent.

Les assemblages selon l'invention sont ainsi réalisés de façon à répondre aux contraintes de charges qui leur sont appliquées en force et en direction, en assurant une liaison rigide des composants.

Les assemblages selon l'invention sont configurés de façon variable suivant les angles d'assemblage, l'assemblage à angle droit n'étant qu'un cas d'application.

Selon un mode de réalisation particulièrement avantageux de la technique d'assemblage selon l'invention, les éléments récepteurs des parties encastrées des autres éléments sont constitués de deux demi-éléments appliqués longitudinalement l'un contre l'autre et rendus solidaires par un moyen de liaison approprié, de sorte que les parties encastrées puissent être introduites avant assemblage des deux demi-éléments dans les ouvertures correspondantes de ceux-ci et, après assemblage des dits demi-éléments, s'y verrouiller longitudinalement par des coupes pratiquées sur deux côtés parallèles des parties encastrées suivant un angle avec l'axe de chaque élément encastré correspondant à l'axe d'assemblage de celui-ci avec l'élément récepteur, la section de la partie encastrée étant dimensionnée à cette fin.

Le moyen de liaison solidarisant les deux demi-éléments de chaque longeron est réalisé par une structure d'accrochage intégrée à chaque demi-élément de longeron, les deux structures d'accrochage se faisant face et correspondant l'une à l'autre de façon à rendre les deux demi-éléments solidaires par une action de pression de l'un contre l'autre.

La poutre réalisée selon l'invention par les assemblages mentionnés ci-dessus peut être munie de jambages verticaux d'extrémité permettant de la fixer sur un module de plancher de passerelle de façon à former une passerelle ou un module de passerelle.

A cette fin une formule d'assemblage peut être réalisée selon laquelle les longerons horizontaux de la poutre reçoivent à chacune de leurs extrémités une extension entaillée pour recevoir, par engagement vertical, un montant au moins partiellement ouvert dont la partie inférieure, après mise en place, est fixée à un élément de structure de plancher afin de réaliser une passerelle ou un module de passerelle.

Pour bien faire comprendre l'invention, on en décrira ci-après, à titre d'exemples, des formes d'exécution préférées en référence au dessin schématique annexé dans lequel :
la figure 1 montre un exemple de poutre-treillis réalisée selon l'invention ;
la figure 2 montre un exemple d'assemblage selon l'invention de deux éléments d'une poutre-treillis ;
les figures 3 et 4 montrent, respectivement avant et après assemblage, le mode de liaison autoverrouillante selon l'invention d'un longeron fait de deux demi-éléments et d'une traverse oblique ;
la figure 5 montre une variante de la poutre-treillis de la figure 1, comportant à ses extrémités des rainures d'assemblage à des montants de garde-corps ;
la figure 6 est une vue de détail d'une extrémité de la poutre de la figure 5 ; et
la figure 7 montre l'assemblage final de la poutre des figures 5 et 6 pour constituer le garde-corps d'une passerelle suspendue.

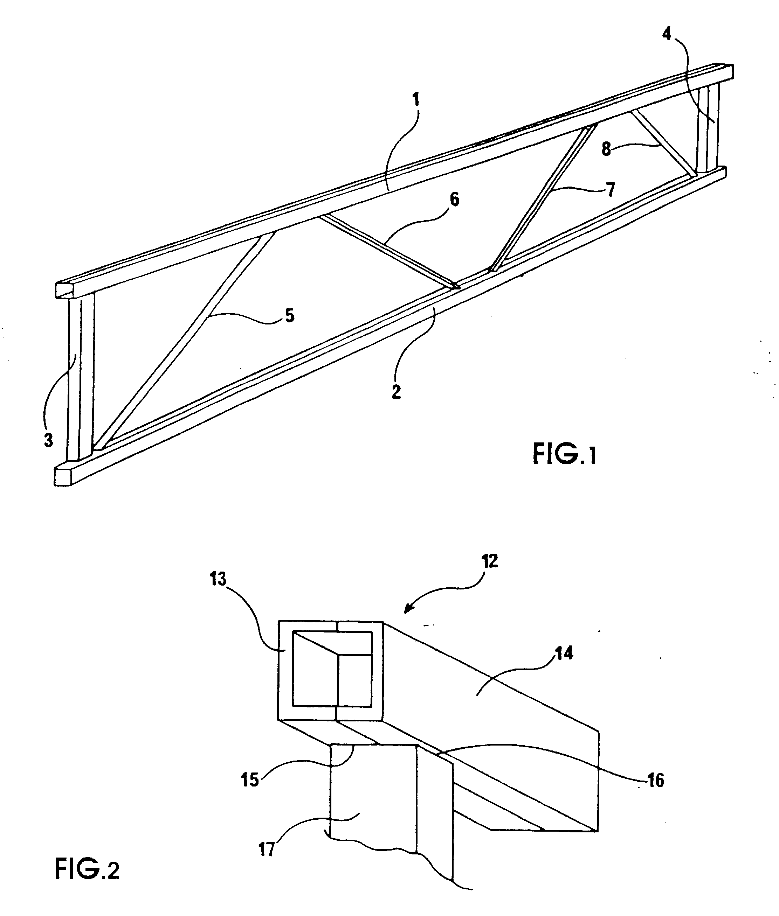

En référence à la figure 1 on a représenté un ensemble simple d'une poutre-treillis formée dans un plan et réalisée selon l'invention. Cette poutre comprend des longerons supérieur 1 et inférieur 2, des montants verticaux d'extrémité 3,4 et des traverses obliques 5,6,7, 8, tous ces éléments étant constitués par des profilés homogènes creux dont l'assemblage s'effectue rigidement par encastrement, sans nécessiter d'autres moyens de liaison porteurs tels que des soudures.

La figure 2 montre un mode de réalisation plus avantageux de l'assemblage selon l'invention, le longeron 12 étant réalisé à partir de deux demi-profils 13,14 comportant des fenêtres d'assemblage 15,16, ces demi-profils étant réunis l'un contre l'autre longitudinalement après insertion, dans les dites fenêtres, de l'extrémité correspondante du montant 17.

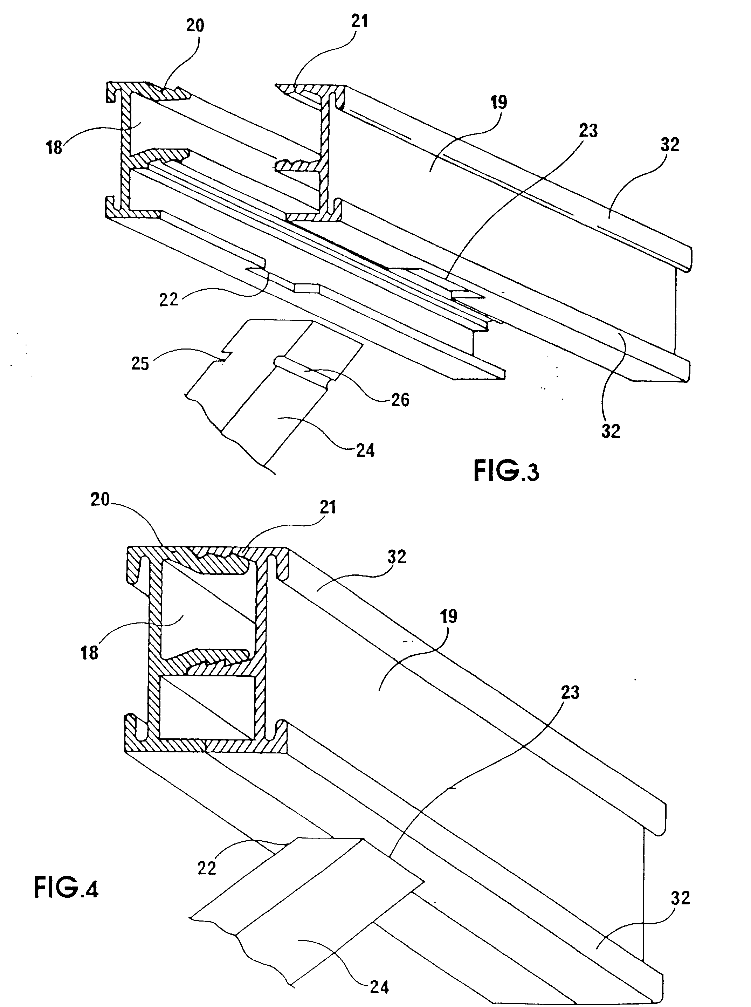

Les figures 3 et 4 montrent une amélioration apportée aux conditions de montage par réunion de deux demi-profils. Les deux demi-profils 18,19 destinés à constituer un longeron sont munis intérieurement de languettes longitudinales à crans transversaux 20,21 qui permettent, par pression, d'appliquer les demi-profils l'un contre l'autre et de les solidariser définitivement pour former un profilé unique. La figure 3 montre en particulier les demi-profils 18,19 écartés pour permettre l'introduction, dans leurs fenêtres 22,23 en regard, de l'extrémité d'une traverse oblique 24 entraillée en 25 et 26. La figure 4 montre l'encastrement réalisé après verrouillage du longeron par coopération des languettes 20,21.

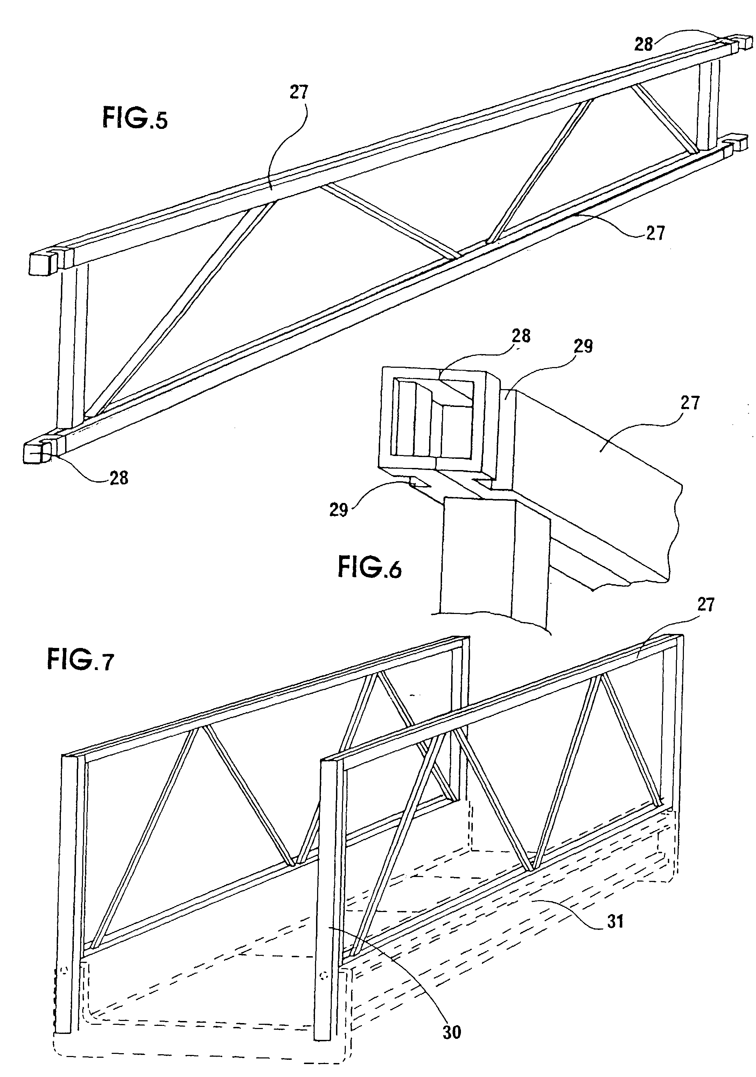

Aux figures 5 à 7 on a représenté une poutre selon l'invention destinée à servir de garde-corps pour une passerelle suspendue, et conçue à cet effet pour s'assembler à un plancher d'une telle passerelle et à un étrier de suspension. Les longerons 27 de la poutre présentent à chaque extrémité une extension 28 qui comporte deux entailles latérales 29 (voir figure 6). Dans les entailles 29 des extrémités correspondantes des longerons 27 supérieur et inférieur on glisse verticalement un montant tubulaire 30, comportant un côté partiellement ou complètement ouvert, qui, comme représenté à la figure 7, se fixe par vissage à une structure de plancher 31 de passerelle figurée en trait pointillé.

Comme on le voit aux figures 3 et 4, chacun des demi-profils 18,19 destinés à constituer un longeron présente extérieurement des parties en regard 32 formant glissières qui permettent d'encastrer par glissement entre ces deux parties une plaque (non figurée au dessin) portant des inscriptions ou servant de support à des accessoires.

On comprendra que la description ci-dessus a été donnée à simple titre d'exemple, sans caractère limitatif, et que des adjonctions ou des modifications constructives pourraient y être apportées sans sortir du cadre de la présente invention qui est déterminé par la teneur des revendications.

## Revendications

1. Poutre-treillis constituée par un assemblage d'éléments profilés creux reliés entre eux par l'encastrement de parties saillantes (22,23) des uns dans des parties (25,26) formant logements récepteurs des autres, les éléments récepteurs étant formés de deux demi-éléments (18,19) assemblés longitudinalement et l'ensemble étant destiné à supporter des charges ou efforts, caractérisée en ce que les parties saillantes (22,23) et les logements récepteurs (25,26) sont réalisés par des découpes permettant un encastrement rigide susceptible de résister, sans l'aide d'autres moyens de liaison, à des charges ou efforts par auto-verrouillage latéral des parties saillantes (22,23) avec les logements récepteurs (25,26) après assemblage des demi-éléments (18,19) des éléments récepteurs.

2. Poutre-treillis selon la revendication 1, caractérisée en ce que le moyen de liaison solidarisant les deux demi-éléments (18,19) de chaque longeron est réalisé par une structure d'accrochage (20-21) intégrée à chaque demi-élément (18,19) de longeron, les deux structures d'accrochage (20,21) se faisant face et correspondant l'une à l'autre de façon à rendre les deux demi-éléments (18,19) solidaires par une action de pression de l'un contre l'autre.

3. Poutre-treillis selon l'une quelconque des revendications précédentes, caractérisée en ce qu'elle est configurée pour former un garde-corps de passerelle suspendue relié à un plancher (31) et à un étrier de suspension.

4. Poutre-treillis selon la revendication 3, caractérisée en ce que les longerons horizontaux (27) de la poutre reçoivent à chacune de leurs extrémités une extension (28) entaillée (en 29) pour recevoir, par engagement vertical, un montant (30) au moins partiellement ouvert dont la partie inférieure, après mise en place, est fixée à un élément de structure de plancher (31) afin de réaliser une passerelle ou un module de passerelle.

5. Poutre- treillis selon l'une quelconque des revendications 1 à 4, caractérisée en ce que les profilés (18,19) formant les longerons présentent des parties (32) en regard formant glissière qui permettent d'encastrer par glissement une plaque portant des inscriptions ou servant de support à des accessoires.

## Patentansprüche

1. Gitterträger, bestehend aus einem Zusammenbau von Hohlprofilelementen, die miteinander verbunden sind durch den Einbau vorstehender Teile (22,23) zum einen in Teile (25,26), die Aufnahmesitze bilden, zum anderen, wobei die Aufnahmeelemente von zwei längs zusammengebauten Halbelementen (18,19) gebildet werden und das Ganze zum Tragen von Lasten oder Kräften bestimmt ist,
**dadurch gekennzeichnet,**
daß die vorstehenden Teile (22,23) und die Aufnahmesitze (25,26) durch Schnittvorgänge verwirklicht werden, die einen starren Einbau ermöglichen, der, ohne Hilfe anderer Verbindungsmittel, Lasten oder Kräften durch seitliches Selbstverriegeln der vorstehenden Teile (22,23) mit den Aufnahmesitzen (25,26) nach Zusammenbau der Halbelemente (18,19) der Aufnahmeelemente zu widerstehen vermag.

2. Gitterträger nach Anspruch 1, dadurch gekennzeichnet, daß das Verbindungsmittel zum festen Zusammenfügen der beiden Halbelemente (18,19) jedes Längsbalkens durch eine in jedes Halbelement (18,19) des Längsbalkens integrierte Hakenkonstruktion (20,21) realisiert ist, wobei die beiden Hakenkonstruktionen (20,21) sich gegenüberliegen und die eine der anderen so entspricht, daß die beiden Halbelemente (18,19) durch die Druckwirkung der einen gegen die andere fest verbunden bleiben.

3. Gitterträger nach einem der vorhergehenden Ansprüche, dadurch gekennzeichnet, daß dieser so gestaltet ist, daß er einen Hängelaufsteggeländer bildet, das mit einem Boden (31) und einem Tragbügel verbunden ist.

4. Gitterträger nach Anspruch 3, dadurch gekennzeichnet, daß die waagerechten Längsbalken (27) des Trägers an jedem ihrer Enden eine (bei 29) eingekerbte Verlängerung (28) aufweisen, um durch vertikalen Eingriff einen wenigstens teilweise offenen Pfosten (30) aufzunehmen, dessen Innenteil nach dem Einbau an einem Bodenkonstruktionsteil (31) befestigt wird, damit ein Laufsteg oder Laufstegmodul entsteht.

5. Gitterträger nach einem der Ansprüche 1 bis 4, dadurch gekennzeichnet, daß die die Längsbalken bildenden Profile (18,19) gegenüberliegende, Laufschienen bildende Teile (32) aufweisen, die es ermöglichen, durch Gleiten eine Platte einzubauen, die Inschriften trägt oder zum Tragen von Zubehör dient.

## Claims

1. Lattice girder constituted by a system of hollow structural members connected to one another by the fixing of projecting portions (22, 23) of respective members in portions (25, 26) forming housings of respective other members, the housing members being formed by two half-members (18, 19) assembled longitudinally, and the assembly being intended to withstand loads or stresses, characterized in that the projecting portions (22, 23) and the housings (25, 26) are formed by cut-out portions permitting a rigid fixing capable of withstanding loads or stresses without the aid of further connection means by means of lateral self-locking of the projecting portions (22, 23) with the housings (25. 26) after assembly of the half-members (18, 19) of the housing members.

2. Lattice girder according to Claim 1, characterized in that connection means locking the two half-members (18, 19) of each longitudinal member together rigidly is formed by a coupling structure (20-21) integral with each half member (18, 19) of a longitudinal member, the two coupling structures (20, 21) facing one another and matching one another in a manner such as to lock the two half-members (18, 19) together rigidly by virtue of a pressing of one against the other.

3. Lattice girder according to any one of the preceding claims, characterized in that it is configured to form a guardrail for a suspended walkway, the guardrail being connected to a floor (31) and to a suspension frame.

4. Lattice girder according to Claim 3, characterized in that the horizontal longitudinal members (27) of the girder receive, at each of their ends, an extension (28) which is notched (at 29) in order to receive, by vertical engagement, an at least partially open upright (30) of which the lower portion, after mounting, is fixed to a structural floor member (31) in order to form a walkway or a walkway module.

5. Lattice girder according to any one of Claims 1 to 4, characterized in that the structural members (18, 19) forming the longitudinal members have facing portions (32) forming a guide permitting the insertion, by sliding, of a plate bearing inscriptions or serving to support accessories.
